Europäisches Patentamt

European Patent Office

Office européen des brevets

(19)

(11) Veröffentlichungsnummer: **0 249 716 B1**

(12) **EUROPÄISCHE PATENTSCHRIFT**

(45) Veröffentlichungstag der Patentschrift: **20.03.91**

(21) Anmeldenummer: **87105742.8**

(22) Anmeldetag: **16.04.87**

(51) Int. Cl.⁵ **C08L 67/06**, //(C08L67/06, 67:02)

(54) **Ungesättigtes Polyesterharz und daraus erhaltene Formmassen.**

(30) Priorität: **14.06.86 DE 3620036**

(43) Veröffentlichungstag der Anmeldung:
**23.12.87 Patentblatt 87/52**

(45) Bekanntmachung des Hinweises auf die
Patenterteilung:
**20.03.91 Patentblatt 91/12**

(84) Benannte Vertragsstaaten:
**AT BE CH DE FR GB IT LI NL SE**

(56) Entgegenhaltungen:
**DE-A- 2 349 939**
**DE-A- 2 408 524**
**US-A- 3 736 278**

(73) Patentinhaber: **HÜLS AKTIENGESELLSCHAFT**
**Patentabteilung / PB 15 - Postfach 13 20**
**W-4370 Marl 1(DE)**

(72) Erfinder: **Krämer, Horst, Dr.**
**Greifenberger Strasse 3**
**W-4370 Marl(DE)**
Erfinder: **Rohmer, Hartmut, Dr.**
**Gersthofener Strasse 22**
**W-4370 Marl(DE)**
Erfinder: **Stawowy, Johannes**
**Jupiterweg 32**
**W-4370 Marl(DE)**

EP 0 249 716 B1

## Beschreibung

Die Erfindung betrifft eine ungesättigte Polyesterharzmasse entsprechend dem Oberbegriff des Patentanspruchs 1. Sie betrifft demnach eine homogene, sich nicht entmischende, ungesättigte Polyesterharzmasse, welche aus einem ungesättigten Polyester, einem gesättigten, flüssigen Polyester als LP-Additiv, Styrol und einer wirksamen Menge eines üblichen Stabilisators besteht. LP-Additiv heißt low-profile-Additiv, worunter ein schwindungsverminderndes Additiv verstanden wird.

Die Erfindung betrifft außerdem aus der ungesättigten Polyesterharzmasse erhaltene Formmassen und zwar eine in der Hitze härtbare Formmasse und eine bei Raum- oder Umgebungstemperatur härtende Formmasse.

Die in der Hitze härtbare Formmasse soll schwindungsfrei (schrumpffrei), die bei Raum- oder Umgebungstemperatur härtende Formmasse soll schwindungsarm härten (Antischrumpfeffekt, LP-Effekt). Die gehärteten Formkörper sollen gute mechanische Eigenschaften, insbesondere eine gute Elastizität, und eine einwandfreie Oberfläche (Oberflächenglätte, Oberflächenglanz) aufweisen.

Die den Formmassen zugrundeliegende, einen gesättigten Polyester als LP-Additiv enthaltende, ungesättigte Polyesterharzmasse und die Formmassen dürfen sich bei der Lagerung unter üblichen Bedingungen (Temperatur, Zeit; Topfzeit im Falle der bei Raum- oder Umgebungstemperatur härtenden Formmasse) nicht entmischen. Im Falle der Entmischung würde in der Regel der LP-Effekt verloren gehen. Selbst wenn das Harz und die Formmassen sich bei der Lagerung nicht entmischen, darf der LP-Effekt nicht verloren gehen (LP-drift).

In der DE-OS 34 26 425 werden ungesättigte Polyesterharzmassen und daraus erhaltene Formmassen beschrieben, welche den geschilderten Anforderungen genügen. Die Harzmassen enthalten eine Kombination von zwei Arten von LP-Additiven, d. h. zusätzlich zu einem gesättigten Polyester ein thermoplastisches Polymer. Ihr Einsatz ist vergleichsweise aufwendig (Lagerhaltung, Aufwand beim Mischen).

Die Aufgabe der Erfindung ist es, eine ungesättigte Polyesterharzmasse mit nur einem LP-Additiv (einer Art von LP-Additiven) bereit-zustellen, mit welchem eine in der Hitze härtbare Formmasse und eine bei Raum- oder Umgebungstemperatur härtende Formmasse erhalten werden können, welche den oben geschilderten Anforderungen genügen.

Die Aufgabe wurde in überraschender Weise wie in den Patentansprüchen 1 bis 3 angegeben gelöst.

Der Stabilisator ist ein üblicher Polymerisationsinhibitor.

Das gewichtsmittlere Molekulargewicht $\overline{M}$ w wird durch gelpermeationschromatografische Analyse bestimmt. Dabei erfolgt die Eichung mit Polystyrol.

Die Dicarbonsäuren können teilweise oder vollständig durch ihre Anhydride ersetzt sein, soweit diese erhältlich sind.

Beispiele von ungesättigten Dicarbonsäuren (Merkmal a, Patentanspruch 1) sind Maleinsäure und ihr Anhydrid, Fumarsäure und ihre Gemische.

Beispiele von gesättigten Dicarbonsäuren (Merkmale a und b, Patentanspruch 1) sind Bernsteinsäure und ihr Anhydrid, Glutarsäure und ihr Anhydrid, Adipinsäure, Pimelinsäure, Korksäure und ihre Gemische.

Beispiele von Diolen (Merkmal b, Patentanspruch 1) sind Trimethylpentandiol-1,5, Trimethylhexandiol-1,6 und ihre Gemische.

Mit der ungesättigten Polyesterharzmasse der Erfindung können eine in der Hitze härtbare Formmasse gemäß Patentanspruch 4, beispielsweise eine Preßmasse (bulk molding compound) oder ein Prepreg (sheet molding compound), und eine bei Raum- oder Umgebungstemperatur härtende Formmasse gemäß Patentanspruch 5, beispielsweise eine Gießmasse, ein Mörtel oder ein Beton, erhalten werden.

Die Erfindung wird durch die folgenden Beispiele (Herstellungsvorschriften) erläutert. Darin bedeuten Teile Massenanteile und Prozent (%) Massen-%.

Die ungesättigten Polyesterharzmassen werden als UP-Harze bezeichnet.

Das vergleichsbeispiel (UP-Harz; Imprägniermasse, Prepreg, gehärtete Platte; Mörtel, gehärteter Formkörper), welches nicht der Erfindung entspricht, wird mit A bezeichnet.

Die den folgenden Untersuchungen zugrundeliegenden, ungesättigten Polyester und gesättigten Polyester (LP-Additive) sind wie in den Tabellen 1 und 2 angegeben charakterisiert.

Tabelle 1: ungesattigte Polyester UP1 bis UP5

| | UP1 | UP 2 | UP3 | UP4 | UP5 |
|---|---|---|---|---|---|
| Maleinsaureanhydrid * | 6,0 | 6,0 | 6,0 | 6,0 | 6,0 |
| Adipinsaure * | 1,0 | 1,0 | 1,0 | 1,0 | 1,0 |
| 1,2-Propylenglykol * | 7,35 | 6,35 | 5,35 | 4,35 | 3,35 |
| Ethylenglykol * | - | 1,0 | 2,0 | 3,0 | 4,0 |
| Saurezahl | 25 | 25 | 30 | 30 | 33 |
| Viskositat, (s) ** | 107 | 64 | 59 | 65 | Entmischung |

\*   Anzahl der zugrundeliegenden Mole

\*\*   der ungesattigte Polyester lag als 60 %ige Lösung in Styrol, bezogen auf die Lösung, vor; die Messung erfolgte mit dem Auslaufbecher 4 bei 25 °C.

Tabelle 2: gesättigte Polyester LP1 bis LP6

| | LP1 | LP2 | LP3 | LP4 | LP5 | LP6 |
|---|---|---|---|---|---|---|
| Adipinsaure * | 10,0 | 10,0 | 10,0 | 10,0 | 10,0 | 10,0 |
| Ethylenglykol * | - | 5,3 | 7,0 | 7,0 | 7,0 | 7,0 |
| 1,2-Propylenglykol * | 10,5 | 5,5 | - | - | - | - |
| Trimethylhexandiol-1,6 * | - | - | 3,5 | 3,5 | 3,5 | - |
| Neopentylglykol * | - | - | - | - | - | 3,5 |
| Saurezahl | 30 | 31 | 25 | 20 | 13 | 20 |
| $\bar{M}_w$ | 5 000 | 6 000 | 5 500 | 7 000 | 11 000 | 6 000 |
| Viskositat, (s) ** | 98 | 145 | 115 | 167 | 339 | 143 |

\*   Anzahl der zugrundeliegenden Mole; das Trimethylhexandiol-1,6 ist ein technisches Isomerengemisch, bestehend aus ca. 30 % des 2,2,4- und ca. 70 % des 2,4,4-Trimethylhexandiol-1,6;

\*\*   der gesattigte Polyester lag als 80 %ige Lösung in Styrol, bezogen auf die Lösung, vor; die Messung erfolgte mit dem Auslaufbecher 4 bei 25 °C.

Herstellung des ungesättigten Polyesterharzes 1 (UP-Harz 1)

75 Teile der Lösung des ungesättigten Polyesters UP3 in Styrol (entsprechend 45 Teilen des ungessättigten Polyesters) und 25 Teile der Lösung des gesättigten Polyesters LP3 in Styrol (entsprechend 20 Teilen des gesättigten Polyesters; insgesamt entsprechend 35 Teilen Styrol) wurden gemischt.

In entsprechender Weise wurden die folgenden, ungesättigten Polyesterharze hergestellt:

UP-Harz 2:   UP3/LP4

UP-Harz 3:   UP4/LP3

UP-Harz 4:   UP4/LP4

UP-Harz A:   UP3/LP6

Herstellung und Charakterisierung des Prepregs 1 und der gehärteten Platte 1

100 Teile des oben erhaltenen UP-Harzes 1 wurden mit 0,6 Teilen einer 10 %igen Lösung von p-Tertiärbutylbrenzcatechin in Styrol, 1,0 Teil Tertiärbutylperbenzoat, 2,0 Teilen einer im Handel erhaltlichen Magnesiumoxidpaste (50 %ig in einem üblichen Anpastpolyester), 3,0 Teilen Zinkstearat, 6,0 Teilen eines Farbpigmentes und 166 Teilen eines feingemahlenen Calcits gemischt.

Auf die passende Länge geschnittene Glasseidenrovings wurden in einer Prepreganlage mit der oben erhaltenen Impragniermasse 1 getränkt. Der so erhaltene Prepreg 1 (Harzmatte 1) wurde 50 Tage bei Raumtemperatur gelagert (siehe Tabelle 3).

Er wurde dann in einer polierten Form (120 mm • 120 mm • 4 mm) wahrend 2 min bei 170 bar zu einer Platte gepreßt (145 °C im unteren und 150 °C im oberen Teil des Werkzeugs). Die gehärtete Platte 1 (Preßplatte 1) wurde der Form entnommen und nach einer Lagerung bei Raumtemperatur von 24 h gemessen (siehe Tabelle 3).

Entsprechend wurden die Imprägniermassen, Prepregs und gehärteten Platten 2 bis 4 und A erhalten (siehe Tabelle 3).

Tabelle 3: Charakterisierung der Prepregs und geharteten Platten 1 bis 4 und A

|  |  | Prepreg nach 50 d Lagerung | gehärtete Platte Längenänderung (DIN 53 464) % * | Oberfläche der gehär- teten Platte |
|---|---|---|---|---|
| 1 | keine Entmischung | | 0,12 | hochglänzend |
| 2 | keine Entmischung | | 0,12 | hochglänzend |
| 3 | keine Entmischung | | 0,16 | hochglänzend |
| 4 | keine Entmischung | | 0,11 | hochglänzend |
| A | keine Entmischung | | -0,11 | matt |

* Die Längenänderung wurde bestimmt als die Differenz aus der Kanten-länge der kalten Platte nach Lagerung und der Kantenlänge des kal-ten Werkzeugs.

4

Herstellung und Charakterisierung des Mörtels 1 und des gehärteten Formkörpers 1

100 Teile des oben erhaltenen UP-Harzes 1 wurden mit 2,0 Teilen Methylethylketonperoxid, 1,0 Teil einer Lösung von Kobaltoctoact in Styrol (Kobaltgehalt: 1 %) und 700 Teilen eines Gemisches von Zuschlagstoffen (11 % feingemahlener Dolomit, 28,8 % Sand mit einer Korngröße von 0,1 bis 0,25 mm, 33,7 % Sand mit einer Korngröße von 1 bis 2 mm und 25,9 % Kies mit einer Korngröße von 2 bis 4 mm) gemischt.

Der so erhaltene Mörtel 1 wurde in eine Stahlform (50 mm • 50 mm • 1 000 mm) gegossen, gerüttelt und dann gehärtet (24 h bei Raumtemperatur und 5 h bei 70 °C). Der gehärtete Formkörper 1 wurde nach dem Abkühlen der Form entnommen und gemessen (siehe Tabelle 4).

Entsprechend wurden der Mörtel A und der gehärtete Formkörper A erhalten (siehe Tabelle 4).

### Tabelle 4: Charakterisierung der gehärteten Formkörper 1 und A

| | Längenänderung (%) |
|---|---|
| 1 | -0,14 |
| A | -0,35 |

UP-Harze, denen diejenigen gemäß Tabellen 1 und 2 denkbaren UP LP-Kombinationen zugrundelagen, die noch nicht diskutiert wurden, führten zu unvorteilhaften (unbrauchbaren) Ergebnissen. Diese UP-Harze gehören ebenso wie das UP-Harz A nicht zum Gegenstand der Erfindung.

## Ansprüche

1. Homogene, sich nicht entmischende, ungesättigte Polyesterharzmasse, bestehend aus 30 bis 60 Massen-% eines ungesättigten Polyesters, 10 bis 30 Massen-% eines gesättigten, flüssigen Polyesters als LP-Additiv, 30 bis 50 Massen-% Styrol und einer wirksamen Menge eines üblichen Stabilisators, wobei sich die Mengenangaben jeweils auf die Harzmasse beziehen, und die Harzmasse durch die folgenden, zusätzlichen Merkmale charakterisiert ist:
   a) der ungesättigte Polyester weist eine Säurezahl von 5 bis 40 mg KOH/g auf und ist aus einem Gemisch einer Alpha-, Beta-olefinisch ungesättigten $C_4$-Dicarbonsäure und einer gesättigten, aliphatischen $C_4$- bis $C_8$-Dicarbonsäure einerseits und einem Gemisch von 1,2-Propylenglykol und Ethylenglykol andererseits in grundsätzlich bekannter Weise durch Polykondensation erhalten, wobei das Molverhältnis der Dicarbonsäuren 4 : 1 bis 8 : 1 und das Molverhältnis der Glykole 1 : 1 bis 5 : 1 ist;
   b) der gesättigte Polyester weist eine Säurezahl von 15 bis 40 mg KOH/g und ein gewichtsmittleres Molekulargewicht $\overline{M}$ w bestimmt durch GPC - Analyse, Eichung mit Polystyrol, von 5 000 bis 8 000 auf und ist aus einer $C_4$- bis $C_8$-Alkan-Alpha, Omega-dicarbonsäure einerseits und einem Gemisch von Ethylenglykol und einem gesättigten, aliphatischen, primäre Hydroxylgruppen aufweisenden Diol mit 5 oder 6 C-Atomen in der Kette zwischen den Hydroxylgruppen und 3 Methylseitengruppen andererseits in grundsätzlich bekannter Weise durch Polykondensation erhalten, wobei das Molverhältnis von Ethylenglykol zum Diol 1 : 1 bis 3 : 1 ist.

2. Polyesterharzmasse nach Anspruch 1,
   gekennzeichnet durch die folgenden Merkmale:
   c) das Molverhältnis der Dicarbonsäuren gemäß Merkmal a ist 5 : 1 bis 7 : 1, das Molverhältnis der Glykole gemäß Merkmal a ist 1,6 : 1 bis 3 : 1;
   d) das Molverhältnis von Ethylenglykol zum Diol gemäß Merkmal b ist 1,5 : 1 bis 2,5 : 1.

3. Polyesterharzmasse nach Anspruch 1 oder 2,

gekennzeichnet durch die folgenden Merkmale:

    e) die dem ungesättigten Polyester zugrundeliegende, gesättigte Dicarbonsäure ist Adipinsäure;

    f) die dem gesättigten Polyester zugrundeliegende Alkandicarbonsäure ist Adipinsäure; das ihm zugrundeliegende Diol ist Trimethylhexandiol-1,6.

**4.** In der Hitze härtbare Formmasse, bestehend aus
- einer ungesättigten Polyesterharzmasse nach einem der Ansprüche 1 bis 3,
- einer wirksamen Menge eines üblichen, die Heißhärtung bewirkenden, peroxidischen Härters und
- üblichen Zusatzstoffen.

**5.** Bei Raum- oder Umgebungstemperatur härtende Formmasse, bestehend aus
- einer ungesättigten Polyesterharzmasse nach einem der Ansprüche 1 bis 3,
- einer wirksamen Menge einer üblichen, die Kalthärtung bewirkenden Kombination eines peroxidischen Härters und eines Beschleunigers, und
- üblichen Zusatzstoffen.

## Claims

**1.** A homogenous, unsaturated polyester resin composition which does not separate and is composed of from 30 to 60 % by weight of an unsaturated polyester, from 10 to 30 % by weight of a saturated, liquid polyester as an LP additive, from 30 to 50 % by weight of styrene and an effective amount of a conventional stabiliser, the amount in each case being based on the resin composition, and the resin composition being characterized by the following, additional features:

    a) the unsaturated polyester has an acid number of from 5 to 40 mg of KOH/g and is obtained in a manner known in principle by polycondensation from a mixture of an alpha,beta-olefinically unsaturated $C_4$-dicarboxylic acid and a saturated, aliphatic $C_4$- to $C_8$-dicarboxylic acid on the one hand and a mixture of 1,2-propylene glycol and ethylene glycol on the other hand, the molar ratio between the dicarboxylic acids being from 4 : 1 to 8 : 1 and the molar ratio between the glycols being from 1 : 1 to 5 : 1;

    b) the saturated polyester has an acid number of from 15 to 40 mg of KOH/g and a weight average molecular weight $\overline{M}$ w, determined by GPC analysis, polystyrene calibration, of from 5,000 to 8,000 and is obtained in a manner known in principle by polycondensation from a $C_4$- to $C_8$-alkane-alpha,omega-dicarboxylic acid on the one hand and a mixture of ethylene glycol and a saturated, aliphatic diol containing primary hydroxyl groups and having 5 or 6 C atoms in the chain between the hydroxyl groups and having 3-methyl side groups on the other hand, the molar ratio between ethylene glycol and the diol being from 1 : 1 to 3 : 1.

**2.** A polyester resin composition according to claim 1, which is characterized by the following features:

    c) the molar ratio between the dicarboxylic acids as in feature a is from 5 : 1 to 7 : 1, and the molar ratio between the glycols as in feature a is from 1.6 : 1 to 3 : 1;

    d) the molar ratio between ethylene glycol and the diol as in feature b is from 1.5 : 1 to 2.5 : 1.

**3.** A polyester resin composition according to claim 1 or 2, which is characterized by the following features:

    e) the saturated dicarboxylic acid on which the unsaturated polyester is based is adipic acid;

    f) the alkanedicarboxylic acid on which the saturated polyester is based is adipic acid; the diol on which the former is based is trimethyl-1,6-hexanediol.

**4.** A heat-curable moulding composition, composed of
- an unsaturated polyester resin composition according to any of claims 1 to 3,
- an effective amount of a conventional peroxidic curing agent which effects hot curing and
- conventional additives.

**5.** A moulding composition which cures at room or ambient temperature and is composed of
- an unsaturated polyester resin composition according to any of claims 1 to 3,
- an effective amount of a conventional peroxidic curing agent/accelerator combination which effects cold curing and

- conventional additives.

**Revendications**

1. Masse homogène de résine de polyester insaturé ne se séparant pas, constituée de 30 à 60 % en poids d'un polyester insaturé, 10 à 30 % en poids d'un polyester liquide saturé comme additif LP, 30 à 50 % en poids de styrène et une quantité efficace d'un stabilisant usuel, les indications de quantité se rapportant toujours à la masse de résine et la masse de résine est caractérisée par les caractéristiques suivantes :

a) le polyester insaturé présente un indice d'acide de 5 à 40 mg KOH/g et on l'obtient par polycondensation de la manière connue d'un mélange d'un acide dicarboxylique $C_4$ alpha-, bêta-oléfinique insaturé et d'un acide dicarboxylique $C_4$ à $C_8$ aliphatique saturé, d'une part, et d'un mélange de 1,2-propylèneglycol et d'éthylèneglycol d'autre part, la proportion molaire des acides dicarboxyliques est de 4 : 1 à 8 : 1 et la proportion molaire des glycols est de 1 : 1 à 5 : 1 ;

b) le polyester saturé présente un indice d'acide de 15 à 40 mg KOH/g et un poids moléculaire moyen en poids $\overline{M}$ w déterminé par analyse GPC, étalonnage avec le polystyrène, de 5000 à 8000 et on l'obtient par polycondensation de la manière connue d'un acide dicarboxylique alpha oméga alcanéique $C_4$ à $C_8$ d'une part et d'un mélange d'éthylèneglycol et d'un diol saturé aliphatique présentant des groupes hydroxyles primaires avec 5 ou 6 atomes de C dans la chaîne entre les groupes hydroxyles et 3 groupes latéraux méthyle, d'autre part, la proportion molaire de l'éthylèneglycol au diol étant de 1 : 1 à 3 : 1.

2. Masse de résine de polyester selon la revendication 1, caractérisée par les caractéristiques suivantes :

c) la proportion molaire des acides dicarboxyliques selon la caractéristique a) est de 5 : 1 à 7 : 1, la proportion molaire des glycols selon la caractéristique a) est de 1,6 : 1 à 3 : 1 ;

d) la proportion molaire de l'éthylèneglycol au diol selon la caractéristique b) est de 1,5 : 1 à 2,5 : 1.

3. Masse de résine de polyester selon la revendication 1 ou 2, caractérisée par les caractéristiques suivantes :

e) l'acide dicarboxylique saturé à base du polyester insaturé est l'acide adipique ;

f) l'acide alcanedicarboxylique à base du polyester saturé est l'acide adipique, le diol à base du polyester saturé est le triméthylhexandiol -1,6.

4. Masse moulée durcissable à chaud, constituée de :
   - une masse de résine de polyester insaturé selon l'une des revendications 1 à 3,
   - une quantité efficace d'un durcisseur peroxyde usuel provoquant le durcissement à chaud et
   - des additifs usuels.

5. Masse moulée durcissant à température ambiante ou environnante constituée de :
   - une masse de résine de polyester insaturé selon l'une des revendications 1 à 3,
   - une quantité efficace d'une combinaison usuelle d'un durcisseur peroxyde provoquant le durcissement à froid et d'un accélérateur, et
   - des additifs usuels.